# NEUE EUROPÄISCHE PATENTSCHRIFT

(11) **EP 3 204 482 B2**
(45) Veröffentlichungstag und Bekanntmachung des Hinweises auf die Entscheidung über den Einspruch: **13.11.2024**
(45) Hinweis auf die Patenterteilung: 13.01.2021
(21) Anmeldenummer: 15784586.8
(22) Anmeldetag: 07.10.2015
(51) Int. Cl.: C12C 13/00, F02G 5/04

(54) **LEBENSMITTELTECHNISCHE PROZESSANLAGE, INSBESONDERE BRAUEREIANLAGE MIT BLOCKHEIZKRAFT**
FOOD-TECHNOLOGICAL PROCESS PLANT, IN PARTICULAR BREWERY PLANT WITH COMBINED HEAT AND POWER
INSTALLATION DE TRAITEMENT DANS LE DOMAINE ALIMENTAIRE, NOTAMMENT UNE INSTALLATION DE BRASSERIE ÉQUIPÉE D'UNE MINI CENTRALE DE COGÉNÉRATION

(30) Priorität: 07.10.2014 DE 102014220334
(43) Veröffentlichungstag der Anmeldung: 16.08.2017
(73) Patentinhaber: Krones Aktiengesellschaft, 93073 Neutraubling (DE)
(72) Erfinder: KAMMERLOHER, Helmut, 93073 Neutraubling (DE)
(74) Vertreter: Grünecker Patent- und Rechtsanwälte PartG mbB
(86) Internationale Anmeldenummer: PCT/EP2015/073194
(87) Internationale Veröffentlichungsnummer: WO 2016/055548

(56) Entgegenhaltungen:
- EP-A2- 0 285 009
- EP-A2- 2 281 467
- WO-A1-2011/045126
- DE-A1- 102007 054 429
- DE-A1- 102009 013 579
- DE-A1- 102010 060 919
- DE-A1- 102012 219 964
- DE-U1- 202008 014 330

## Beschreibung

Die Erfindung betrifft eine lebensmitteltechnische Prozessanlage, insbesondere Brauereianlage sowie ein Verfahren zum energieoptimierten Versorgen einer lebensmitteltechnischen Prozessanlage gemäß den Oberbegriffen der Ansprüche 1 und 8.

DE 20 2008 014 330 U1 beschreibt eine Vorrichtung zur Energieversorgung einer Brauerei, wobei es einen Abgaswärmetauscherkreislauf sowie einen davon getrennten Motorwärmetauscherkreislauf gibt, die parallel zueinander geschaltet sind und in einem gemeinsamen Wärmespeicher münden. Dieses Dokument zeigt nicht, dass mindestens drei in Reihe geschaltete Wärmetauscher, über die ein Wärmeträger durch Abwärme des Blockkraft-Heizwerks erwärmt wird und zeigt ebenfalls auch nicht, dass dieser Wärmeträger über die mindestens drei in Reihe geschalteten Wärmetauscher erhitzt wird und dabei eine Temperatur von größer als 100 °C aufweist.

Die DE 10 2009 013 579 A1 beschreibt eine Brauereianlage zur Herstellung und zum Abfüllen von Bier, wobei über eine Energieerzeugungsanlage über einem Blockkraftheizwerk eine Flaschenreinigungsanlage, eine Flaschenpasteurisierungsanlage und die ZIP-Reinigungsanlage beheizt werden. Dieses Dokument beschreibt ebenfalls nicht eine Reihenschaltung von drei Wärmetauschern, die durch Abwärme des Blockkraftheizwerks auf mehr als 100 °C erwärmt werden.

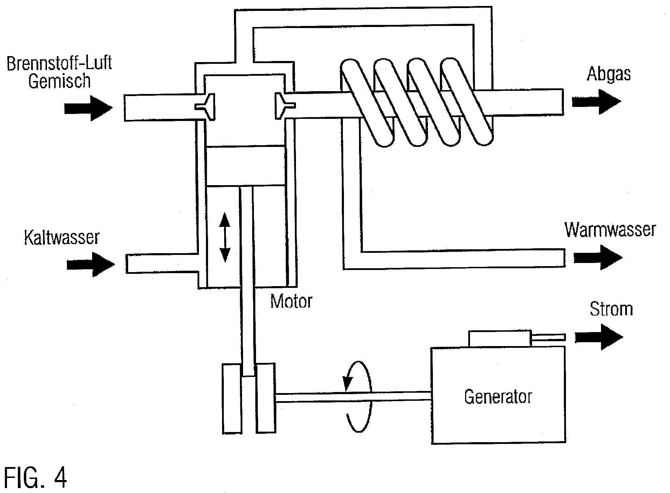

In lebensmitteltechnischen Prozessanlagen gibt es bei allen Teilschritten, beispielsweise bei der Malz- und Bierherstellung und Abfüllung einen erheblichen Energiebedarf. In vielen lebensmitteltechnischen Prozessanlagen, insbesondere Brauereianlagen, wird zumindest ein Teil des elektrischen und thermischen Energiebedarfs bereits über ein Blockheizkraftwerk (BHKW) gedeckt. Fig. 4 zeigt beispielsweise eine Prinzipsskizze eines entsprechenden Blockheizkraftwerkes, das hier beispielhaft einen Verbrennungsmotor umfasst sowie einen Stromgenerator, so dass die durch Verbrennung erzeugte mechanische Arbeit in elektrische Energie umgewandelt werden kann. Ein Antriebsmotor muss dabei gekühlt werden. Wie in Fig. 4 gezeigt wird, kann durch die Abwärme des Motors und des Abgases durch einen Wärmetauscher Warmwasser erzeugt werden. Zum Teil werden Blockheizkraftwerke mit Turbolader verwendet. Hierbei muss das bei der Kompression stark erhitzte Gas wieder auf etwa 30° bis 50°C abkühlt werden, um Motorschäden zu verhindern und einen sicheren und effizienten Betrieb des BHKW's zu gewährleisten. Mit dem etwa 80°C bis 90°C warmen Motorkühlwasser kann man einen erster Teil dieser Wärme abholen, um das erhitzte Gas jedoch weiter auf 30°C bis 50°C abkühlen zu können werden bisher oft große Luftkühler eingesetzt und die restliche Wärme nach draußen abgeleitet. Gemäß dem Stand der Technik werden wie bereits erwähnt mehrere Wärmetauscher zur Kühlung des Blockheizkraftwerkes eingesetzt. Beispielsweise ein Wärmetauscher zum Kühlen des Motoröls, ein Wärmetauscher zum Kühlen von Kühlmedium für den Motorblock und ein Wärmetauscher zum Kühlen des Abgases des Blockheizkraftwerkes.

Bei den bekannten lebensmitteltechnischen Prozessanlagen, insbesondere Brauereien werden jedoch die Wärmeträger, die dann die unterschiedlichen Wärmeverbraucher, beispielsweise der Brauerei, erhitzen sollen, nur auf eine Maximaltemperatur von etwa 92° bis 96°C erwärmt. Diese Temperatur des Wärmeträgers ist jedoch für eine energieoptimierte und umfangreiche Verwendung in Brauereien zu niedrig. Hier werden, insbesondere zum Beheizen von beispielsweise Maischvorrichtungen oder Würzepfannen weit höhere Temperaturen von 100° bis über 110°C benötigt. Bislang wird jedoch z.B. in Brauereien die ein motorbetriebenes Blockheizkraftwerk einsetzen, nicht die komplette Motorabwärme in Form von Hochdruckheisswasser oder Dampf aus den Motor ausgekoppelt und in einem Kreislauf zur Beheizung von Wärmeverbrauchern zugeführt.

In einer Flaschenwaschmaschine sind üblicherweise interne Rohrbündelwärmetauscher verbaut, die in der Lauge liegen und so diese ohne zusätzliche Pumpenergie (auf der Laugenseite) aufwärmen. Als Wärmeträgermedium wird hier normalerweise Dampf oder Hochdruckheisswasser mit Temperaturen zwischen 130° und 160°C eingesetzt. Wenn das Wärmeträgermedium nun in der Temperatur auf zum Beispiel 95°C reduziert ist, so wie sie von einem Blockheizkraftwerk bereitgestellt wird, dann ist die treibende Kraft Delta Theta reduziert und es muss entweder der K-Wert des Wärmetauschers stark erhöht werden (zum Beispiel mit einer äußeren Anströmung), oder die Wärmetauscheroberfläche. Beides kann nur unter großem Aufwand in einer Flaschenwaschmaschine bewerkstelligt werden. Anlagen, die mit so niedriger Temperatur beheizt werden, besitzen also meist einen zusätzlichen externen Wärmetauscher für die Laugenbeheizung oder ein entsprechender muss nachgerüstet werden. Natürlich benötigt man hierfür eine zusätzliche Pumpe und Anlagenkomponenten, um die Lauge durch den externen Wärmetauscher zu fördern und aufzuheizen. Entsprechende Lösungen sind kostenintensiv und aufwendig.

Darüber hinaus sollte ein Blockheizkraftwerk immer im Volllastbetrieb laufen um wirtschaftlich zu arbeiten und einen möglichst hohen Anteil des Strombedarfs z.B. einer Brauerei abdecken. Meist sind die Blockheizkraftwerke jedoch so ausgelegt, dass sie den Grundlastwärmestrom einer Flaschenwaschmaschine decken können und gegebenenfalls noch zusätzlich Warmwasser erzeugen können bzw. müssen, weil sie die Abwärme nicht kontinuierlich abführen können. Bei einem Stopp der Flaschenwaschmaschine muss aber entweder das Blockheizkraftwerk heruntergeregelt oder abgeschaltet werden oder die Überschusswärme nach einer Zwischenspeicherung später eingesetzt werden. In jedem Fall ist es sehr schwierig, den vollen Energiebedarf einer Flaschenwaschmaschine mit einem Blockheizkraftwerk bereitzustellen, weil diese nicht kontinuierlich betrieben werden kann und kleinere und größere Stopps, unterschiedliche Flaschengrößen oder Reinigungsgeschwindigkeiten der Flaschenwaschmaschine unterschiedliche Wärmeströme verursachen. Solche Lastschwankungen könnte man natürlich auch mit der Produktion von Warmwasser ausgleichen. In Sudhäusern und Brauereien hat man während der Produktionswoche allerdings meist schon zu viel Warmwasser, weil dieses zum Beispiel bei der Würzeproduktion (z.B. Würzekühlung) nach jedem Sud erneut in großen Mengen anfällt. Wenn nun zusätzliches Warmwasser, d.h. Wasser in einem Temperaturbereich von 75°C bis 85°C anfällt, wird dieses Überschusswasser in großen Tanks zwischengespeichert und häufig bei Wochenend- oder größeren Tankreinigungen verwendet.

In manchen Fällen wird das Heizmedium, das z.B. eine Temperatur in einem Bereich von etwa 95°C aufweist, auch in Kälteanlagen eingesetzt. Dort wird, vereinfacht ausgedrückt, über eine Absorptionskälteanlage aus Wärme Kälte produziert. Eine so betriebene Kälteanlage sollte in Brauereien z.B. -5°C produzieren und erreicht dabei einen COP (coefficient of performance = Nutzkälte zu Antriebswärme) zwischen 0,4 bis 0,6 (ohne Berücksichtigung von Pumpenergien). Aus 100 kW Wärmestrom aus einem Blockheizkraftwerk können mit einem COP von z.B. 0,5 etwa 50 kW Kältestrom mit einer Temperatur von z.B. -5°C produziert werden. Um mit einer Kompressionskältemaschine 50 kW Kälte bereitzustellen, braucht man bei einem COP von z.B. 4 im Vergleich zur Absorptionskältemaschine weit unter 15 kW elektrischer Energie. Im Hinblick auf die hohen elektrischen Arbeitspreise ist die Kältebereitstellung über eine Absorptionskälteanlage in Zusammenhang mit 95°C heißer Antriebswärme aus Blockheizkraftwerken nicht effizient. Darüber hinaus kann eine Absorptionskälteanlage die gewöhnliche Kältemaschine beispielsweise einer Brauerei nicht ersetzen. Sie ist also eine zusätzliche Anschaffung und rechnet sich im Beispiel kaum.

Die Abwärme eines Blockheizkraftwerkes wird nach Möglichkeit auch zur sinnvollen Beheizung in der Produktion der Brauerei eingesetzt. Die Schwierigkeit bei Verwendung von Blockheizkraftwerken ist die Wärmeträgerrücklauftemperatur (zum BHKW). Das heißt, der Wärmeträger, der vom Blockheizkraftwerk erhitzt wurde und durch Erwärmen unterschiedlicher Wärmeverbraucher abkühlt, sollte im Normalfall bei erneutem Zuführen in das Blockheizkraftwerk 78° bis 80°C nicht überschreiten, damit eine ausreichende Kühlung des Blockheizkraftwerkes gewährleistet ist.

Es kann aber aus verschiedenen Gründen nicht immer gewährleistet werden, dass die Rücklauftemperatur kleiner gleich 80°C beträgt. Manche Heizapparate können nur eine Rücklauftemperatur von etwa 85°C oder 90°C bereitstellen, weil das zu beheizende Medium bereits auf 80°C bis 85°C aufgeheizt oder auf diese Temperatur temperiert werden muss (z.B. Würzekochung oder Pasteurisation). Die daraus resultierenden höheren Rücklauftemperaturen erhöhen die Gefahr das Blockheizkraftwerk zu schädigen. Außerdem lassen die Blockheizkraftwerkhersteller meist keine höheren Rücklauftemperaturen zur Kühlung des Blockheizkraftwerkes zu als etwa 80°C. Der energieoptimierte und umfangreiche Einsatz von Blockheizkraftwerken, insbesondere in Brauereien, gestaltet sich daher schwierig.

Ein Blockheizkraftwerk braucht nach dem Start eine Mindestzeit um warm zu laufen bis es unter Volllast betrieben werden und elektrischen Strom produzieren kann.

Die Warmlaufphase eines Blockheizkraftwerkes kostet zum einen Zeit und es kann auch nach einem längeren Stopp eines Blockheizkraftwerkes nicht sofort eine hohe Last abgerufen werden (egal ob elektrisch oder thermisch). Außerdem verbraucht das Blockheizkraftwerk während dieser Zeit Brennstoff der nicht in Nutzarbeit umgesetzt wird. Wenn ein Blockheizkraftwerk vor Erreichen seiner Betriebstemperatur unter Nennlast läuft, kann dies zu einem Motorschaden führen oder zumindest zu sehr viel höherem Verschleiß.

Im Hinblick auf den Stand der Technik ist es die Aufgabe der vorliegenden Erfindung eine Prozessanlage, insbesondere eine Brauereianlage, sowie ein Verfahren zur energieoptimierten Versorgen einer solchen Anlage mittels Blockheizkraftwerk bereitzustellen.

Erfindungsgemäß wird diese Aufgabe durch die Merkmale der Ansprüche 1 und 8 gelöst.

Gemäß der vorliegenden Erfindung wird der Wärmeträger, über den mindestens ein Wärmeverbraucher der lebensmitteltechnischen Prozessanlage mit Wärmeenergie versorgt wird, über mindestens drei in Reihe geschaltete Wärmetauscher am Blockheizkraftwerk durch Abwärme des Blockheizkraftwerkes erwärmt. Das Blockheizkraftwerk kann so auf einfache Art und Weise einen Wärmeträger auf hohe Temperaturen aufheizen.

Durch die stufenweise Erwärmung des externen Wärmeträgers können sehr hohe Wärmeträger Temperaturen über 100°C und sogar über 110°C (bis zu 115°C) (insbesondere aus mindestens 80% der Motorabwärme) realisiert werden. Ein Wärmeträger, der so hohe Temperaturen aufweist, ist insbesondere für die Wärmeverbraucher einer Brauerei geeignet, die entsprechend hohe Temperaturen fordern. Mit den hohen Heizmitteltemperaturen lässt sich also auch im Sudhausprozess die Würzekochung in Teilen oder sogar ganz versorgen. Man kann somit die Wärmeenergie im Sudhaus aber auch anderen Bereichen der Brauerei sinnvoll einsetzen und damit auch Primärenergie ersetzen. So eignet sich der auf die hohen Temperaturen aufgeheizte Wärmeträger besonders vorteilhaft auch für Flaschenwaschmaschinen mit internem Wärmetauscher die in der Heizflächenreserve begrenzt sind und auch Absorptionskälteanlagen würden mit höheren Antriebstemperaturen höhere COP's erreichen.

Ein entsprechend aufgeheiztes Wärmeträgermedium kann in einen Energiespeichertank, insbesondere einem Druckspeichertank, eingeleitet und zwischengespeichert werden, und steht bei Bedarf den Wärmeverbrauchern zur Verfügung. Je höher die Temperaturdifferenz zw. Vorlauf - und Rücklauftemperatur am BHKW, analog am Energiespeichertank ist, um so mehr Energie kann bei gleichem Volumen aufgenommen bzw. gespeichert werden und somit ggf. der Energiespeichertank kleiner ausgelegt werden. Die Rückläufe von solchen "Hochtemperaturverbrauchern" (in einer Niedertemperaturbrauerei) lassen sich dann z.B. auch in anderen "Niedertemperaturverbrauchern" ein zweites Mal nutzen, so dass sich der Wärmeträger auf eine niedrige Temperatur, zum Beispiel 80°C abkühlen kann. Hochtemperaturverbraucher sind Verbraucher, die Wärmeträger mit einer Temperatur > 100°C bei Normaldruck benötigen.

Unter lebensmitteltechnischen Prozessanlagen versteht man beispielsweise Brauereianlagen, Anlagen zur Getränkeherstellung- und Abfüllung wie zum Beispiel Wein, Spirituosen, Säfte, Wasser, Erfrischungsgetränke, Getränke auf Tee- oder Getreidebasis, Anlagen für die Flüssig-Nahrungsmittelherstellung- und Abfüllung wie zum Beispiel Molkereiprodukte, (Speise-)Öle, (Soja-)Sauce, Konzentratherstellung, z. B. Sirupe für die Nahrungsmittel- und Getränkeindustrie, sowie die dazugehörige Reinigungsanlagen, wie beispielsweise, CIP - und andere Reinigungsanlagen, etc.

Erfindungsgemäß sind die in Reihe geschalteten mindestens drei Wärmetauscher Wärmetauscher aus folgender Gruppe: Wärmetauscher WT1 zum Kühlen von Motoröl des Blockheizkraftwerkes, Wärmetauscher WT2 zum Kühlen von Kühlmedium für den Motorblock des Blockheizkraftwerkes, Wärmetauscher WT3 zum Kühlen des Abgases des Blockheizkraftwerkes und Wärmetauscher WT4a zum Kühlen eines komprimierten Ansauggases des Blockheizkraftwerkes. Vorteilhafterweise befindet sich dabei der Wärmetauscher WT1 zum Kühlen des Motoröls in Flussrichtung des Wärmeträgers betrachtet vor den anderen Wärmetauschern. Dies ist insbesondere deshalb wesentlich, da dann stets eine ausreichende Kühlung des Motoröls gewährleistet ist, da man ansonsten Gefahr läuft, dass das Motoröl überhitzt und die Schmieraufgabe im Motor nicht mehr ausreichend und dauerhaft entsprechend den Vorgaben erfüllen kann und somit der Motor Schaden nehmen kann. Es ist besonders vorteilhaft, wenn der zweite Wärmetauscher zum Kühlen von Kühlmedium für den Motorblock dem ersten Wärmetauscher zum Kühlen des Motoröls nachgeordnet ist und der dritte Wärmetauscher zum Kühlen des Abgases als letzter Wärmetauscher angeordnet ist - da dann der Wärmeträger im zweiten Wärmetauscher noch eine ausreichend niedrige Temperatur aufweist, um das Kühlmedium bzw. Kühlwasser für den Motorblock ausreichend zu kühlen. Da das Abgas eine relativ hohe Temperatur in einem Bereich von bis zu 500°C aufweist, kann hier eine große Wärmemenge abgegeben werden und zugleich der Wärmeträger auf höhere Temperaturen erhitzt werden. Vorteilhafter weise ist dieser Wärmetauscher an letzter Stelle nach dem zweiten Wärmetauscher angeordnet. Außerdem ist die Kühlung des Abgases unkritisch, da bei mangelhafter Kühlung kein Motorschaden entstehen kann.

Gemäß einer weiteren Ausführungsform ist ein weiterer Wärmetauscher vorgesehen, der in Reihe zu den zuvor genannten Wärmetauschern geschaltet wird. Dabei wird insbesondere nach dem ersten und vor dem dritten Wärmetauscher, vorteilhafterweise zwischen dem zweiten Wärmetauscher und dem dritten Wärmetauscher, ein Wärmetauscher zum Kühlen eines komprimierten Ansauggases des Blockheizkraftwerkes angeordnet.

Wenn dieser Wärmetauscher mit den zuvor genannten Wärmetauschern in Reihe geschaltet wird, erlaubt dies, den Wärmeträger auf eine noch höhere Temperatur zu bringen, z.B. bis zu 115°C. Die Wärmeenergie, die also durch Kühlen eines komprimierten Ansauggases, das bei Verwenden eines Turboladers anfällt, wurde im Stand der Technik nicht so verwendet und dient somit wirksam zur Erhöhung der Wärmeträgertemperatur. An diesem Wärmetauscher können weit über 30 kW thermische Energie in den Wärmeträger abgeführt werden, bei beispielsweise Volllast eines BHkW mit 400 kW elektrischer Energieproduktion.

Vorteilhafterweise wird der Wärmeträger, der durch die mindestens drei in Reihe geschalteten Wärmetauscher erwärmt wird, über einen Energiespeichertank, insbesondere Druckspeichertank oder direkt mindestens einem Wärmeverbraucher in der Prozessanlage zugeführt und der abgekühlte Wärmeträger wieder direkt, oder über den Energiespeichertank dem Blockheizkraftwerk zum Kühlen rückgeführt. Der Wärmeträger kann sinnvoll auch durch mehrere Wärmeverbraucher in einem Kreislauf K geführt werden und seine Energie abgeben.

Wenn der Wärmeträger auch mit einem Energiespeichertank verbunden ist, kann ein nicht sofort abgenommener Überschusswärmestrom in selbigen Energiespeicher eingelagert und zwischengespeichert werden. Damit kann das Blockheizkraftwerk immer oder zumindest länger in seinem Auslegungsbereich betrieben werden und zugleich können Lastspitzen, die über dem Nennwärmestrom des BHKW's liegen, über den Energiespeicher abgedeckt werden. Erst wenn der Speicher einen vorbestimmten Füllgrad erreicht, muss das Blockheizkraftwerk zunächst heruntergeregelt oder gegebenenfalls später ganz abgestellt werden. Darüber hinaus kann in einem entsprechenden Energiespeichertank, insbesondere Druckspeichertank, auch Wärmeenergie mit Temperaturen > 100°C eingelagert werden, und beispielsweise durch Entnahme an einer oder mehreren bestimmten Stellen im Falle eines Schichtenspeichers und/oder durch einen Mischer eine exakt gewünschte Wärmeträgertemperatur erreicht werden, wobei dieser Wärmeträger dann dem/(n) Wärmeverbraucher(n) zugeführt und im Kreislauf rückgeführt werden kann.

Bevor der im Kreislauf geführte Wärmeträger erneut dem ersten Wärmetauscher WT1, d.h. dem Wärmetauscher zum Kühlen des Motoröls zugeführt wird, kann er, wenn er eine zu hohe Temperatur von beispielsweise > 80°C aufweist, vorab auf eine entsprechende Temperatur gekühlt bzw. eingestellt werden. Insbesondere ist dazu ein weiterer Wärmetauscher vorgesehen, der den Wärmeträger auf eine vorbestimmte Temperatur, vorzugsweise in einem Bereich von 75°C bis 80°C °C abkühlen kann. Somit kann gewährleistet werden, dass das Blockheizkraftwerk stets ausreichend gekühlt wird derart, dass keine Schäden entstehen.

Wenn der Wärmetauscher zum Kühlen des verdichteten Ansauggases in Reihe zu den anderen Wärmetauschern geschaltet wird und den (externen) Wärmeträger (der mit dem Energiespeicher verbunden ist) aufwärmt, ist es nicht mehr notwendig, wie oftmals im Stand der Technik realisiert wurde, dass die Wärmemenge, die an diesem Wärmetauscher abfällt, einem Kühlmedium zum Kühlen des Motorblocks zugeführt wird, und so hat die Temperatur des Kühlmediums für den Motorblock des Blockheizkraftwerkes eine niedrigere Temperatur. Aus diesem Grund kann die Eingangstemperatur des externen Wärmeträgers, der im Kreislauf geführt wird, bevor er dem ersten Wärmetauscher WT1 rückgeführt wird, eine höhere Temperatur aufweisen als bei vergleichbaren Schaltungen im Stand der Technik. Somit ist es beispielsweise möglich, dass die Temperatur des Wärmeträgers, wenn es dem ersten Wärmetauscher WT1 zum Kühlen des Motoröls zugeleitet wird, eine Temperatur in einem Bereich von > 80°C bis 83°C bzw. sogar > 80°C bis 85°C aufweisen darf. Dies ermöglicht dem Prozess z.B. in der Brauerei eine größere Freiheit und macht gegebenenfalls auch einen weiteren Wärmetauscher, der den rücklaufenden Wärmeträger kühlt, überflüssig. Durch die niedrigeren Kühlwassertemperaturen im Motorblock, muss ggf. auch weniger Wärme über die Schmierung (Motoröl) abgegeben werden weil das Motorkühlwasser mehr davon bereits im Motor aufnehmen kann. Hierdurch sinkt die maximale Motoröltemperatur und man kann somit auch eine etwas höhere Kühlmitteltemperatur zum Kühlen des Motoröls zulassen (die mittlere Öltemperatur würde also gleich bleiben).

Wenn nun beispielsweise die Rücklauftemperatur des Wärmeträgers im Kreislauf K einer vorbestimmten Temperatur T₁ entspricht oder in einem vorbestimmten Temperaturbereich liegt, ist es nicht notwendig, über den weiteren Wärmetauscher den rücklaufenden Wärmeträger zu kühlen. Dann ist vorteilhafterweise ein Bypass vorgesehen, der entweder den rücklaufenden Wärmeträger und/oder das Kühlmedium, das den rücklaufenden Wärmeträger kühlt, am Wärmetauscher WT5, der den rücklaufenden Wärmeträger kühlt, vorbeileitet. Somit kann auf schwankende Rücklauftemperaturen des Wärmeträgers reagiert werden.

Vorteilhafterweise weist das Blockheizkraftwerk einen Wärmetauscher zum Kühlen des komprimierten Ansauggases zwischen einem Verdichter und einem Motor des Blockheizkraftwerkes auf und insbesondere einen zweiten Wärmetauscher zum Kühlen des vorgekühlten komprimierten Ansauggases des Blockheizkraftwerkes, der in Strömungsrichtung hinter dem Wärmetauscher zum Kühlen des komprimierten Ansauggases liegt.

Diese Niedertemperaturwärme wird im Stand der Technik über Dach abgegeben, aber man kann diese Restwärme des komprimierten Ansauggases noch gezielt z.B. in einer Brauerei, verwenden, wobei dann auch sichergestellt wird und werden muss, dass die Temperatur des Luftbrennstoffgemisches eine ausreichend niedrige Temperatur aufweist bevor es in den Motor bzw. in den Brennraum eintritt.

Vorteilhafterweise weist der zweite Wärmetauscher zum Kühlen des Ansauggases einen Zulauf für ein Kühlmedium auf, insbesondere für Kaltwasser und einen Auslauf für das erwärmte Kühlmedium, wobei das erwärmte Kühlmedium dann den Einlass des Wärmetauschers WT5, der den im Kreislauf rückgeführten Wärmeträger abkühlt, als Kühlmedium zugeleitet werden kann. Somit kann einerseits dem komprimierten Ansauggas noch Restwärme entzogen werden und weiter noch dem im Kreislauf rücklaufenden Wärmeträger (zum BHKW) Energie entzogen werden, so dass dann schließlich Warmwasser beispielsweise mit einer Temperatur von 40° bis 80°C erzeugt werden kann, und z.B. in einer Brauerei, z.B. in den Brauwasserspeichertank geleitet werden kann. Eine entsprechende Verschaltung ist energetisch besonders vorteilhaft, weil die geforderten Temperaturen am BHKW eingehalten werden und zugleich möglichst wenig Energie an die Umgebung verloren geht.

Bei dem erfindungsgemäßen Verfahren zum energieoptimierten Versorgen einer lebensmitteltechnischen Prozessanlage wird durch ein Blockheizkraftwerk ein Wärmeträger zum Versorgen von Wärmeverbrauchern der lebensmitteltechnischen Prozessanlage erwärmt. Der Wärmeträger wird über mindestens drei in Reihe geschaltete Wärmetauscher die komplette Abwärme des Blockheizkraftwerkes (z.B. durch Motoröl, Kühlwasser, Verdichtungswärme und Abgas) auf eine Temperatur von mindestens 100 °C vorteilhafterweise mindestens 110°C erwärmt.

Es ist vorteilhaft, wenn der Wärmeträger in einem ersten Wärmetauscher WT1, insbesondere zum Kühlen des Motoröls des Blockheizkraftwerkes, von einer Temperatur T₁ in einem Bereich von 75°C bis 80°C auf eine Temperatur T₂ die dem Wärme- und Volumenstrom enspricht, erwärmt wird, wobei diese aber vorteilhafterweise 2°C bis 3°C unter der maximalen Öltemperatur liegen wird, die am Motor austreten darf.

Bei zusätzlichem Einsatz eines Wärmeträgers zum Kühlen des verdichteten Ansauggases in Reihe zu den drei Wärmetauschern, darf die Temperatur T₁ etwas höher liegen, d.h. also in einem Bereich von z.B. > 80°C bis 83°C oder > 80°C bis 85°C.

Der Wärmeträger kann nach dem ersten Wärmetauscher in einen zweiten Wärmetauscher zum Kühlen des Kühlmediums für den Motorblock des Blockheizkraftwerkes erwärmt werden und dann mit dem dritten Wärmetauscher zum Kühlen des Abgases auf eine Temperatur T₄ > 100°C vorzugsweise 110°C erwärmt werden. Es ist auch möglich, dass gemäß einer weiteren Ausführungsform nach dem ersten Wärmetauscher WT1, vorzugsweise aber nach dem zweiten Wärmetauscher WT2 der Wärmeträger von einem Wärmetauscher WT4a zum Kühlen eines komprimierten Ansauggases des Blockheizkraftwerkes, also zwischen einem Verdichter und einem Verbrennungsmotor, der Wärmeträger weiter erwärmt wird und anschließend durch den dritten Wärmetauscher auf die Temperatur T₄, die bis zu 5°C über der Temperatur T₄ liegen kann, die erzeugt wird, wenn der weitere Wärmetauscher nicht verwendet wird.

Gemäß dem erfindungsgemäßen Verfahren wird der Wärmeträger im Kreislauf geführt und insbesondere nachdem er durch die mindestens drei Wärmetauscher auf eine Temperatur T₄ > 100°C, insbesondere > 110°C erwärmt wurde, über einen Energiespeichertank, insbesondere Druckspeichertank oder direkt zumindestens einem Wärmeverbraucher zugeleitet. Der direkt oder in mehreren Stufen abgekühlte Wärmeträger wird wieder direkt oder über den Energiespeichertank dem Blockheizkraftwerk zu dessen Kühlung rückgeführt.

Vorteilhafterweise ist der Energiespeichertank ein Schichtenspeicher, wobei der Wärmeträger aus dem Schichtenspeicher mit einer vorbestimmten Temperatur entnommen wird und/oder an einer oder mehreren Stelle(n) entnommen wird und/oder mit einem Mischer auf die vorbestimmte Temperatur gebracht wird. Somit kann eine exakte Temperatur für die Wärmeverbraucher realisiert werden.

Der Wärmeträger kann, bevor er dem ersten Wärmetauscher, insbesondere dem Wärmetauscher zum Kühlen von Motoröl rückgeführt wird, über einen weiteren Wärmetauscher WT5 auf eine Temperatur T₁ in einem Bereich von 75°C bis 80°C oder auf eine Temperatur > 80°C bis 83°C oder > 80°C bis 85°C.gekühlt werden.

Vorteilhafterweise kann beim Betriebsstart des Blockheizkraftwerkes dem Blockheizkraftwerk der Wärmeträger, vorzugsweise aus dem Energiespeichertank, mit einer Temperatur T_{1'} > 60°C zugeführt und dann weiter auf z.B. 90 °C hochgerampt werden, so dass das Motoröl des Blockheizkraftwerkes über den Wärmetauscher WT1, der eigentlich sonst das Motoröl kühlt, auf eine Temperatur in einem Bereich von 70°C bis 85°C aufgewärmt werden kann und/oder das Kühlmedium für den Motorblock des Blockheizkraftwerkes über den Wärmetauscher WT2, der sonst eigentlich zum Kühlen des Motor-Wärmemediums dient, auf eine Temperatur von 60°C bis 90°C erwärmt werden kann. Somit dienen die beiden Wärmetauscher zum Vorwärmen des Blockheizkraftwerkes. Diese Vorwärmung erfolgt langsam und vorteilhafterweise mit langsam ansteigenden Temperaturen T_{1'}. Dabei sind die internen Blockheizkraftwerkkühlkreise in Betrieb, d.h. das Kühlmedium für den Motorblock und das Motoröl zirkulieren, damit die Wärme in den Motor gelangen kann. Somit erreicht der Motor schneller seine Betriebstemperatur und kann schneller unter Last betrieben werden. Die Vorwärmung verringert den Treibstoffbedarf und zugleich den Motorverschleiß.

Zur Erhöhung des mechanischen und elektrischen Wirkungsgrades wird in dem motorbetriebenen Blockheizkraftwerk vorteilhafterweise ein Turbolader eingesetzt.

Die Erfindung betrifft gemäß einer unabhängigen Lösung auch eine lebensmitteltechnische Prozessanlage, insbesondere Brauereianlage, mit einem Blockheizkraftwerk zum Erwärmen eines Wärmeträgers durch mehrere Wärmetauscher, wobei dieser Wärmeträger zumindest einen Wärmeverbraucher der lebensmitteltechnischen Prozessanlage mit Wärmeenergie versorgt. Dabei ist einer der Wärmetauscher am BHKW ein Wärmetauscher zum Kühlen eines komprimierten Ansauggases. Die Anlage umfasst auch einen Energiespeichertank, in die der auf mindestens 100°C, vorzugsweise mindestens 110°C heiße Wärmeträger (der vorzugsweise die komplette nutzbare Abwärme des BHKW's abholt), eingelagert werden kann, und über den die Wärmeverbraucher mit Wärmeenergie versorgt werden können. Dabei ergeben sich durch die Verwendung des Wärmetauschers, der das komprimierte Ansauggas kühlt, die gleichen Vorteile wie zuvor erläutert, insbesondere der Vorteil, dass die Rücklauftemperatur des im Kreislauf geführten Wärmeträgers höher sein darf als im Stand der Technik. Bei dieser Erfindung müssen die weiteren Wärmetauscher zum Erwärmen des Wärmeträgers nicht zwangsläufig in Reihe angeordnet werden, sondern können auch zumindest teilweise parallel zueinander angeordnet sein. Die Abstrahlwärme des BHKW's kann für die aktive Beheizung hier nicht genutzt werden.

Die vorliegende Erfindung wird nachfolgend unter Bezugnahme folgender Figuren näher erläutert.
- Fig. 1: zeigt ein vereinfachtes Blockschaltbild, das die grundlegenden Komponenten der Erfindung zeigt.
- Fig. 2: zeigt einen Teil eines Blockheizkraftwerkes mit Turbolader gemäß der vorliegenden Erfindung.
- Fig. 3: zeigt ein Blockschaltbild einer weiteren möglichen Ausführungsform gemäß der vorliegenden Erfindung.
- Fig. 4: zeigt schematisch die wesentlichen Komponenten eines Blockheizkraftwerkes gemäß dem Stand der Technik.

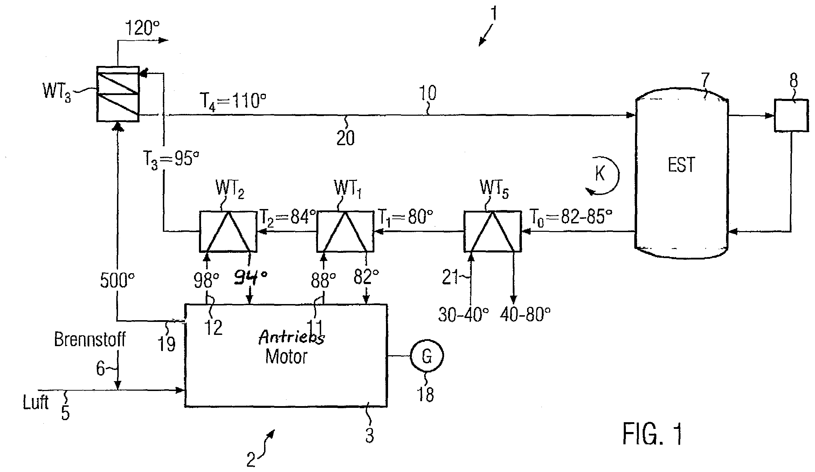

Fig. 1 zeigt ein Blockschaltbild, das die wesentlichen Komponenten der vorliegenden Erfindung zeigt. Insbesondere zeigt Fig. 1 den Motor 3 des Blockheizkraftwerkes 2 der lebensmitteltechnischen Prozessanlage 1 mit Generator 18. Der Motor 3 weist eine Zuführung 5 für Ansaugluft auf sowie eine Zuleitung 6 für Brennstoff auf. Der Motor 3 weist zirkulierendes Motoröl 11 auf, das sich auf hohe Temperaturen aufheizt, beispielsweise auf eine Ölbad-Vorlauftemperatur von 80°C bis 90°C, in diesem Ausführungsbeispiel auf eine Ölbadvorlauftemperatur von 88°C (die mittlere Ölbadtemperatur liegt in diesem Beispiel bei 85°C {(88°C+82°C)/2=85°C}. Dieses Motoröl 11 kann über den Wärmetauscher WT1, über den Wärmeträger 10 gekühlt werden. Der Wärmetauscher WT1 ist dabei bevorzugt als Gegenstromwärmetauscher, insbesondere in Form eines Plattenwärmetauschers ausgelegt, der eine Auslegung mit einer sehr geringe Grädigkeit von z.B. 2°C zwischen Kühlmitteleintrittstemperatur (im Bsp. 80°C) und der Ölbadrücklauftemperatur (im Bsp. 82°C) zulässt, bevor das abgekühlte Öl in den Motor 3 rückgeführt wird.

Da man mit dem Volumenstrom des zirkulierenden Motoröls die mittlere Ölbadtemperatur auch beeinflussen kann (im Bsp. 85°C), wird diese z.B. optimiert so ausgelegt, dass die Ölbadvorlauftemperatur z.B. 90°C nicht überschreitet und die mittlere Ölbadtemperatur z.B. 85°C bis 88°C beträgt.

Weiter weist der Motor 3 einen Motor- Kühlkreislauf mit Kühlmedium 12 (meist ein Wasser- Glykol- Gemisch) auf, der zum Kühlen des Motorblocks 3 erforderlich ist. Dieses Kühlmedium 12 kann über den Wärmetauscher WT2 gekühlt werden. Die Vorlauflauftemperatur des Kühlmediums 12 kann beispielsweise 85°C bis 100°C hier 98°C betragen bei einem Volumenstrom von z.B. 38 m³/h bei einem BHKW mit z.B. 450kW elektrischer Leistung. Das gekühlte Motorkühlmedium hat nach der Kühlung im Wärmetauscher WT2 beispielsweise eine Temperatur von 85°C bis 95°C bevor es wieder in den Motor zurückgeführt wird. Der "externe" Wärmeträger hat nach dem Wärmetauscher WT2 z.B. eine Temperatur in einem Bereich von 90°C bis 100°C, hier im Bsp. hat T₃ 95°C.

Am Auslass 19 des Motors 3 werden die heißen Abgase aus dem Motor in eine entsprechende Leitung geführt und werden zu einem weiteren Wärmetauscher WT3 geleitet, hier ein Gas/Flüssigkeitswärmetauscher, insbesondere ein Rohrbündelwärmetauscher. Das austretende Abgas hat beispielsweise eine Temperatur von 400°C bis 500 °C, hier 500°C, und nach dem Wärmetauscher WT3 eine Temperatur von 100 bis 200 °C, hier 120°C. Das Abgas strömt bei etwa 1 MW Brennstoffeinsatz mit einem Massenstrom von etwa 2200 kg/h durch den dritten Wärmetauscher WT3.

Der Wärmeträger 10 wird also von einer Temperatur T₁ stufenweise durch die Wärmetauscher WT1, WT2 und WT3 auf eine Temperatur von T₄ > 100°C, insbesondere > 110°C, in diesem Fall 110°C aufgeheizt. Der Volumenstrom des Wärmeträgers 10 durch alle Wärmetauscher WT1, WT2, WT3 oder gegebenenfalls, wenn vorhanden, einem weiteren Wärmetauscher, ist vorteilhafterweise konstant und liegt beispielsweise in einem Bereich von 10m³/h bis 20m³/h.

Der erwärmte Wärmeträger 10 kann dann über entsprechende Leitungen 20 entweder direkt einem oder mehreren Wärmeverbrauchern 8 (in Fig. 1 nicht dargestellt) zugeführt werden oder vorteilhafterweise zunächst einem Energiespeichertank 7 (in einen oberen entsprechenden Temperaturbereich). Der Energiespeichertank 7 ist in diesem Ausführungsbeispiel als Druckspeichertank ausgebildet, damit der Wärmeträger mit den hohen Temperaturen eingelagert werden kann. Vorteilhafterweise ist der Energiespeichertank 7 als Schichtenspeicher ausgebildet, da in bekannter Weise dann ein Wärmeträger einer bestimmten Temperatur entnommen werden kann oder aber durch eine Mischeinrichtung (nicht dargestellt) erzeugt werden kann. Von dem Wärmeverbraucher oder Verbrauchern 8 kann der Wärmeträger 10 dann entweder wieder in den unteren Bereich des Energiespeichertanks 7 oder auch (hier nicht dargestellt) direkt zum Blockheizkraftwerk zur Kühlung zurückgeleitet werden. Vorteilhafterweise wird der Wärmeträger 10 in den Energiespeicher 7 rückgeführt. Durch den Energiespeichertank kann gewährleistet werden, dass ein nicht sofort abgenommener Überschusswärmestrom zwischengespeichert werden kann. Somit kann das Blockheizkraftwerk sehr lange, vorteilhafterweise immer, im Auslegungsbereich betrieben werden. Erst wenn der Speicher 7 einen vorbestimmten Füllgrad erreicht, muss zunächst die Leistung heruntergeregelt und das Blockheizkraftwerk gegebenenfalls später ganz abgestellt werden.

Die Rücklauftemperatur von den Verbrauchern kann nur schwierig auf einen konstanten Wert eingestellt werden. Daher kann es sein, dass die Rücklauftemperatur T₀, d.h. die Temperatur, die der rücklaufende Wärmeträger hat, bevor er wieder in den ersten Wärmetauscher WT1 eintreten würde, zu hoch ist, um die Komponenten des Blockheizkraftwerkes ausreichend zu kühlen. Aus diesem Grund ist der Sicherheitswärmetauscher WT5 vorgesehen, der es ermöglicht, die Temperatur des Wärmeträgers 10 auf einen vorbestimmten Wert oder auf einen vorbestimmten Wertebereich T1 einzustellen, wenn dies nötig ist. Dazu wird ein Kühlmedium 21, beispielsweise mit einer Temperatur von 10°C bis 75°C (hier 30° bis 40°C), dem Wärmetauscher WT5 zum Kühlen des Wärmeträgers 10 zugeführt und mit einer Temperatur von beispielsweise 50° bis 80°C abgeleitet. Bei dem erwärmte Kühlmedium 21 kann es sich beispielsweise um Brauwasser handeln das in einen Brauwassertank eingelagert wird. Der Wärmetauscher WT5 ist z.B. ein Gegenstrom- Plattenwärmetauscher.

Mit den hohen Heizmitteltemperaturen von z.B. 110°C, die durch die mehrstufige Erwärmung des Wärmeträgers 10 erzielt werden kann, ist es möglich, dass der Wärmeträger im Energiespeichertank 7 in einem Sudhaus beispielsweise für das Würzekochen verwendet werden kann. Somit kann ein BHKW wesentlich größer ausgelegt werden weil es nun auch direkt in den gesamten Brauprozess für Heizzwecke eingesetzt werden kann und somit Primärenergie ersetzt wird. Es ist vorteilhaft, dass der erste Wärmetauscher WT1, der das Öl 11 des Motors kühlt, in der Reihe der Wärmetauscher WT1, WT2, WT3 der erste Wärmetauscher ist, damit auf jeden Fall sichergestellt ist, dass mit dem Wärmeträger 10 eine ausreichend niedrige Motorölrücklauftemperatur (im Bsp. 82°C) erreicht wird. Vorteilhafterweise ist der Wärmeträger WT3 am Ende der Reihe der mindestens drei Wärmetauscher angeordnet, da dann auch sichergestellt ist, dass das Kühlmedium 12 des Kühlkreislaufes des Motors zuvor ausreichend gekühlt werden kann, damit der Motor keinen Schaden nimmt. Es kann dann sichergestellt werden, dass T₂ in einem Bereich von 83°C bis 90°C liegt.

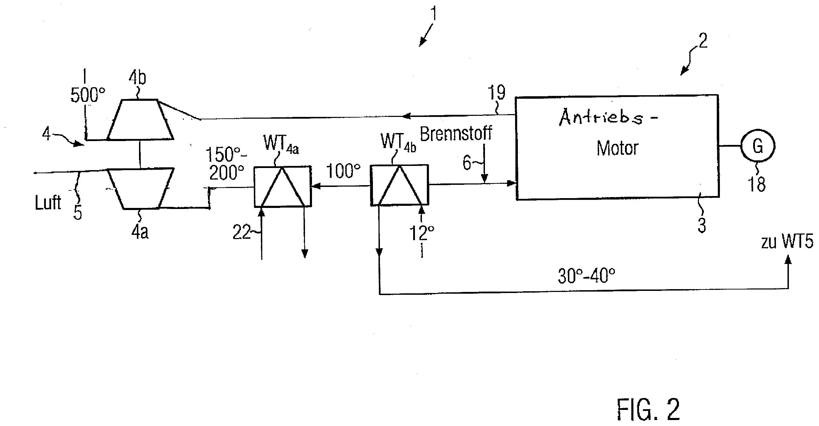

Fig. 1 veranschaulicht nur das Grundprinzip der vorliegenden Erfindung. Es ist für einen hohen mechanischen Wirkungsgrad jedoch besonders vorteilhaft, wenn das Blockheizkraftwerk einen Turbolader 4 aufweist, der die kinetische Energie des Abgases wirksam nutzt. Dazu sind, wie in Fig. 2 gezeigt ist, beispielsweise die mit 4b angedeuteten Turbinen angeordnet, die über eine Antriebswelle einen Verdichter 4a zum Komprimieren des Ansauggases antreiben. Das verdichtete Ansauggas kann Temperaturen in einem Bereich von 100° bis 200° C aufweisen und muss gekühlt werden, bevor es dem Motor 3 zugeführt wird. Dazu kann der Wärmetauscher WT4a vorgesehen sein, der das verdichtete Ansauggas auf etwa 95°C bis 110°C, hier 100°C abkühlt. Dazu wird ein Kühlmedium 22 in den Wärmetauscher WT4a geleitet. Das vorgekühlte Ansauggas kann dann mit einem zweiten Wärmetauscher WT4b zum Kühlen der Ansaugluft aus dem WT4a weiter auf 30°C bis 50°C abgekühlt werden, bevor es zusammen mit dem Brennstoff dem Motor 3 zugeführt wird. Der Brennstoff kann alternativ auch vor oder zwischen den Wärmetauschern WT4a und WT4b zugeführt werden (hier nicht dargestellt) . Zum Kühlen kann zum Beispiel Kaltwasser mit einer Temperatur von 10°C bis 25°C, hier 12°C verwendet werden. Das Kaltwasser kann dann beispielsweise auf eine Temperatur von 30° bis 40°C erwärmt werden. Als Wärmetauscher WT4a wird beispielsweise ein Gas/Flüssigkeitswärmetauscher, insbesondere Lamellen- Luft- Wasserwärmetauscher verwendet. Als Wärmetauscher WT4b wird ebenfalls ein Gas/Flüssigkeitswärmetauscher, wie eben erwähnt, verwendet.

Erwärmtes Kaltwasser aus dem Wärmetauscher WT4b kann dann beispielsweise als Kühlmedium dem Wärmetauscher WT5 zugeführt werden (siehe Fig. 1), wird im Wärmetauscher WT5 weiter erwärmt und kann, wie bereits beschrieben, beispielsweise als Warmwasser in einem Warmwassertank, insbesondere Brauwassertank, gespeichert werden.

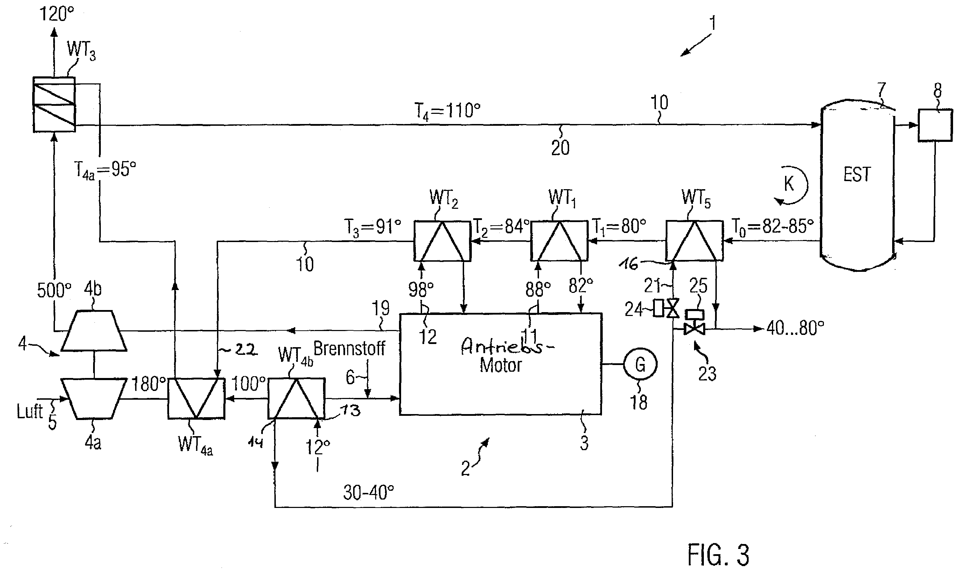

Es ist ganz besonders vorteilhaft, wenn das Kühlmedium 22, das in Fig. 2 gezeigt ist und in den Wärmetauscher WT4a geleitet wird, der Wärmeträger 10 ist, wie insbesondere in Fig. 3 näher erläutert wird. Das Ausführungsbeispiel in Fig. 3 entspricht vom Aufbau im Wesentlichen dem in Zusammenhang mit der Fig. 1 gezeigten Ausführungsbeispiel, wobei jedoch zusätzlich zu den Wärmetauschern WT1, WT2 und WT3 noch der Wärmetauscher WT4a in Reihe geschaltet wurde, und zwar zwischen den Wärmetauschern WT2 und WT3. Dies bringt den Vorteil mit sich, dass die Abwärme, beispielsweise 50 kW, des Wärmetauschers WT4a wirksam zur Erwärmung des Wärmeträgers 10 verwendet werden kann. Daher kann die Temperatur T₄ nochmals erhöht werden bis zu einer Temperatur von 110°C bis 115°C. Der Wärmeträger 10 hat dann eine so hohe Energie, dass er z.B. in die oberste Schicht des Energiespeichertanks eingelagert werden kann oder aber direkt zum Wärmeverbraucher geleitet werden kann. Bei diesem Ausführungsbeispiel wird, wie auch bereits im Zusammenhang mit Fig. 2 angedeutet, das in dem Wärmetauscher WT4b erhitzte Kaltwasser zum Wärmetauscher WT5 zum Kühlen des im Kreislauf K geführten Wärmeträgers 10 auf eine Solltemperatur T1 gekühlt.

Sollte die Temperatur T₀ des rückgeführten Wärmeträgers 10 bereits einer Temperatur T₁ im Sollbereich entsprechen, so kann eine Bypass-Schaltung 23, die den Wärmetauscher WT5 überbrückt, freigeschaltet werden. Dazu kann beispielsweise, wie in Fig. 3 dargestellt ist, der Bypass 23 vorgesehen sein, der das Kühlmedium 21 am Wärmetauscher WT5 vorbeileitet, indem das Ventil 24 geschlossen wird und das Ventil 25 geöffnet wird. Alternativ kann, auch wenn nicht dargestellt, eine entsprechende Bypass-Leitung von dem Leitungsabschnitt 25 zu dem Leitungsabschnitt 26 zwischen den Wärmetauschern WT1 und WT5 angeordnet sein, derart, dass durch Öffnen entsprechender Ventile der Wärmetauscher WT5 überbrückt wird (nicht dargestellt).

Wenn durch den Wärmetauscher WT4a Wärmeenergie in den Wärmeträger 10 überführt wird und nicht wie bei herkömmlichen Anlagen in das Kühlmittel 12 des Motors, hat insgesamt das Kühlmittel 12 des Motors eine niedrigere Temperatur. Demzufolge kann auch die Solltemperatur für die Temperatur T₁ etwas höher > 80°C bis zu z.B. 85°C, vorzugsweise aber bis zu 83°C bzw. 85 °C liegen, da dann immer noch eine ausreichende Kühlung des Motoröls und des Kühlmediums 12 realisiert werden kann. Dies ist besonders vorteilhaft, da eine konstante Rücklauftemperatur von z.B. 80°C z.B. von den Brauereiverbrauchern schwierig sicherzustellen ist und manche Wärmeverbraucher nur Rücklauftemperaturen von z.B. 85°C oder 90°C bereitstellen, weil beispielsweise das zu beheizende Medium bereits auf 80° bis 85°C aufgeheizt oder auf diese Temperatur temperiert werden muss. Hohe Rücklauftemperaturen am BHKW (T₀) würden jedoch die Gefahr mit sich bringen, dass das Blockheizkraftwerk geschädigt oder nicht effizient im Auslegungsbereich betrieben werden kann, weil es heruntergeregelt werden muss.

Nachfolgend wird das erfindungsgemäße Verfahren beispielhaft anhand Fig. 3 näher erläutert.

Das Blockheizkraftwerk braucht nach seinem Start eine gewisse Zeit, um warm zu laufen bis es unter Volllast betrieben werden kann und elektrischen Strom produzieren kann. Das in diesem Ausführungsbeispiel verwendete Blockheizkraftwerk 2 weist eine Nennleistung von 450kW elektrischer Leistung auf NN auf. Damit dieses Blockheizkraftwerk schneller unter Volllast betrieben werden kann - thermisch und elektrisch - wird es gemäß der vorliegenden Erfindung vorgeheizt. In vorteilhafter geschickter Weise können dazu Wärmetauscher WT1 und WT2 verwendet werden. Dabei wird der Wärmeträger 10 vorzugsweise aus dem unteren und/oder oberen Bereich (nicht dargestellt) des Energiespeichertanks 7 mit einer Temperatur T₁ von 60°C bis 90°C dem Wärmetauscher WT1 zugeführt, wobei der Wärmetauscher WT5 hier z.B. durch Bypass 23 überbrückt wird. Über den Wärmetauscher WT1 kann nun das Motoröl von einer Anfangstemperatur im Bereich von z.B. 30°C bis 40°C langsam auf Betriebstemperatur in einem Bereich von z.B. 80°C bis 90°C erwärmt werden. Dabei muss natürlich der Ölkreislauf im Motor 3 in Betrieb sein. Zusätzlich und/oder alternativ kann der Wärmeträger 10 dann auch dem Wärmetauscher WT2 zugeführt werden. Über den Wärmetauscher WT2 kann dann das Kühlmedium 12, das den Motorblock kühlt, von einer Anfangstemperatur im Bereich von 30°C bis 40°C auf z.B. 80°C bis 90°C erhöht werden. Auch hier ist der interne Kühlkreislauf des Motors 3 in Betrieb. Der Wärmeträger 10 kann dann weiter durch die Wärmetauscher WT4a und WT3 geleitet werden, wobei hier auch bereits in der Anfangsphase, d.h. kurz nach dem Start, Wärmeenergie an den Wärmeträger 10 abgegeben werden kann. Der Wärmeträger 10 kann dann wieder in den Energiespeichertank 7 rückgeführt werden, jedoch vorteilhafterweise nicht in den oberen Bereich, sondern, wenn auch hier nicht dargestellt, in einen mittleren oder unteren Bereich, in dem das kältere Medium eingelagert ist. Durch die geschickte Nutzung der Wärmetauscher WT1 und WT2 zum Vorwärmen verringert sich zum einen der Treibstoffbedarf für die Warmlaufphase, zum anderen verringert sich zugleich der Motorverschleiß erheblich. Außerdem kann das Blockheizkraftwerk schneller unter Last betrieben werden. Es ist also ganz allgemein vorteilhaft, dass der durch das Blockheizkraftwerk erwärmte und im Energiespeichertank 7 gelagerte Wärmeträger 10 beim nächsten Neustart des Blockheizkraftwerkes 2 wiederverwendet werden kann.

Bei diesem Ausführungsbeispiel wird Ansauggas, hier Umgebungsluft, als Ansauggas von einem Verdichter 4a des Turboladers verdichtet. Die Temperatur erhöht sich dabei beispielsweise auf 100° bis 200°C, in diesem Beispiel z.B. 180°C. Der Wärmetauscher WT4a kühlt das verdichtete heiße Ansauggas auf eine niedrigere Temperatur in einem Bereich von z.B. 90°C bis 110°C, hier 100°C mit Hilfe des im Kreislauf geführten Wärmeträgers 10. Der Volumenstrom des Ansauggases beträgt im Beispiel etwa 2200kg/h. Das vorgekühlte verdichtete Ansauggas wird dann über einen zweiten Wärmetauscher WT4b weiter auf eine Temperatur von 30°C bis 50°C abgekühlt und nachdem Brennstoff in einem vorbestimmten Mischverhältnis dem Ansauggas beigemengt wurde, kann das Gemisch dem Motor in bekannter Weise zugeleitet werden.

Zur Kühlung des Motors 3 dient der Wärmetauscher WT1, der das Motoröl beispielsweise von einer Ölbadvorlauftemperatur von 80°C bis 90°C abkühlt, hier beispielsweise von 88° auf 82°C. Der Wärmetauscher WT1 hat hier beispielsweise eine Eingangstemperatur von 80°C. Wie zuvor erläutert wurde könnte jedoch die Temperatur T₁ auch bis zu 83°C bzw. auch bis zu 85°C erhöht werden, da der Wärmetauscher WT4a in Reihe mit den Wärmetauschern WT1, WT3 geschaltet ist und den Wärmeträger 10 aufwärmt und die Energie des komprimierten Ansauggases nicht in den Kühlkreislauf des Motors abgegeben wird. Der im Wärmetauscher WT1 auf eine Temperatur T₂ in einem Bereich von 80°C bis 90°C , hier auf 84 °C erwärmte Wärmeträger 10 wird dann in den in Reihe angeordneten Wärmetauscher WT2 geleitet, der das Kühlmedium 12 des Motors kühlt. Dabei wird das Kühlmedium 12 beispielsweise von Temperaturen in einem Bereich von 85°C bis 100°C auf Temperaturen in einem Bereich von 85°C bis 95°C abgekühlt. Der Volumenstrom des Kühlmediums 12 liegt z.B. in einem Bereich von 30m³/h bis 40m³/h bei einem BHKW

Der Wärmeträger 10 wird durch den Wärmetauscher WT2 auf einen Temperaturbereich T₃ von 85°C bis 95°C, hier 91°C erwärmt und gelangt dann in den Gas/Flüssigkeitswärmetauscher WT4a und wird dabei auf eine Temperatur T₄ₐ in einem Bereich von 95°C bis 98°C, insbesondere hier 95°C erwärmt. Im Anschluss wird der Wärmeträger 10 in den Gasflüssigkeitswärmetauscher WT3 eingeleitet und wird dabei auf die Temperatur T₄ >= 100° vorzugsweise 110°C bis etwa maximal 120°C erhitzt. Das Abgas verlässt den Motor mit einer Temperatur von beispielsweise 400°C bis 500°C, tritt in den Turbolader 4b ein und treibt dessen Turbinenschaufeln an, die wiederum mit dem Verdichter 4a gekoppelt sind. Der Volumenstrom des Abgases beträgt im Beispiel etwas über 2200kg/h

Der heiße Wärmeträger 10 steht nun der Brauerei bzw. der lebensmitteltechnischen Prozessanlage als Heizmedium zur Verfügung. Wie in der Fig. 3 gezeigt ist, kann dabei der Wärmeträger 10 in die oberste Schicht des Energiespeichertanks 7 eingelagert werden oder aber auch direkt zum Verbraucher, beispielsweise einer Flaschenwaschmaschine (nicht dargestellt), geleitet werden. Wird der Wärmeträger 10 im Energiespeichertank 7 eingelagert, kann er von dort an den oder die Wärmeverbraucher 8 weitergeleitet werden. Bei den Wärmeverbrauchern, die eine sehr hohe Wärmeträgertemperatur >= 110°C benötigen, wird dann der Wärmeträger aus dem obersten Bereich des Energiespeichertanks entnommen. Gibt es Wärmeverbraucher, die niedrigere Temperaturen benötigen, kann über mehrere Entnahmestellen Wärmeträger einer bestimmten Temperatur entnommen werden oder aber der Wärmeträger kann auf eine bestimmte Temperatur gemischt werden (mit dem Ziel eine möglichst niedrige Rücklauftemperatur vom Verbraucher zu bekommen). Nach dem Aufheizen der Wärmeverbraucher 8 kann der Wärmeträger, der zwischenzeitlich abgekühlt ist, wieder in den unteren Bereich des Wärmespeichertanks 7 eingelagert werden. Es wäre auch möglich, dass der abgekühlte Wärmeträger direkt wieder zum Wärmetauscher WT5 des Blockheizkraftwerkes geleitet wird (nicht dargestellt).

Über einen nicht dargestellten Temperatursensor, über den erfasst werden kann, mit welcher Rücklauftemperatur der Wärmeträger 10 zum Blockheizkraftwerk rückgeleitet wird, kann bestimmt werden, ob die Temperatur T₀ einer bestimmten Solltemperatur T₁ entspricht oder in einem bestimmten Bereich liegt. Ist die Temperatur T₀ zu hoch, kann über den Wärmetauscher WT5 der Wärmeträger 10 auf eine passende Temperatur T₁ abgekühlt werden, hier beispielsweise von einer Temperatur in einem Bereich von 82° bis 85°C auf eine Temperatur T1 von 80°C. Wird bestimmt, dass eine weitere Abkühlung nicht notwendig ist, da beispielsweise die Temperatur T₀ der Solltemperatur T₁ entspricht, kann der Wärmetauscher WT5 überbrückt werden bzw. eine Bypass-Schaltung für das Kühlmedium 21 aktiviert werden, indem z.B. das Ventil 24 geschlossen wird und das Ventil 25 des Bypass 23 geöffnet wird. Dann fließt der Wärmeträger 10 ungekühlt durch den Wärmetauscher WT5. Alternativ könnte der Wärmeträger 10 auch noch eine entsprechende Bypass-Schaltung (nicht gezeigt) am Wärmetauscher WT5 vorbeigeleitet werden. Der Wärmeträger 10 tritt dann wie zuvor beschrieben wieder in den Wärmetauscher WT1 ein und zirkuliert so im Kreislauf K. Der Volumenstrom des Wärmeträgers 10 liegt bei diesem Verfahren beispielsweise in einem Bereich von 10m³/h bis 20m³/h. Der Volumenstrom des Wärmeträgers 10 durch die Wärmetauscher WT1, WT2, WT3, WT4a kann konstant sein.

Durch den Wärmetauscher WT4b kann beispielsweise Kaltwasser mit 10°C bis 25°C, im Bsp. 12°C, auf eine Temperatur von 30° bis 40°C erwärmt werden. Das erwärmte Medium aus dem Wärmetauscher WT4b kann dann dem Wärmetauscher WT5 als Kühlmedium 21 zugeführt werden und dabei auf beispielsweise 40° bis 80°C oder 35° - 85 °C erwärmt werden.

Einfachheitshalber wurden in den schematischen Darstellungen beispielsweise Ventile insbesondere zwischen den Wärmetauschern oder Temperatursensoren zum Erfassen der jeweiligen Temperaturen, der in die Wärmetauscher einlaufenden und auslaufenden Medien nicht näher erläutert und bezeichnet. Ferner kann die Anlage auch eine Steuer- und Regeleinrichtung aufweisen, die die einzelnen Ventile ansteuert und auf der Grundlage der gemessenen Temperaturen entsprechende Stellventile oder Absperrventile (Bypass) ansteuert, damit die entsprechenden Temperaturen ihre Sollwerte erreichen.

Es ist auch möglich, dass mindestens einer der in Reihe geschalteten Wärmetauscher über eine Bypassleitung überbrückt werden kann, so dass es möglich ist, bei Bedarf durch entsprechende Stellventil(e) zumindest einen Teil des Wärmeträgers im Bypass am entsprechenden Wärmetauscher vorbeizuführen.

Der Wärmeträger 10 kann z.B. Wasser sein.

Auch zwischen Energiespeichertank 7 und Wärmetauscher WT5 kann eine nicht dargestellte Mischeinrichtung vorgesehen sein zum Einstellen einer Temperatur T₀ des Wärmeträgers.

Die Erfindung betrifft auch ein Blockheizkraftwerk geeignet für lebensmitteltechnische Prozessanlagen mit Wärmeenergie zum Erwärmen eines Wärmeträgers mit Wärmeenergie, wobei der Wärmeträger über mindestens drei in Reihe geschaltete Wärmetauscher WT1, WT2, WT3 durch Abwärme des Blockheizkraftwerkes erwärmt wird, wobei das Blockheizkraftwerk wie in den Ansprüchen oder der Beschreibung erläutert aufgebaut sein kann.

Gemäß einem weiteren nicht in den Figuren dargestellten Ausführungsbeispiel, das den vorherigen Ausführungsbeispielen entspricht, kann unabhängig von allen weiteren Merkmalen der Wärmetauscher WT4a in Reihe zu WT1, WT2, WT3 auch vor WT1, insbesondere zwischen WT5 und WT1 angeordnet sein oder alternativ zwischen WT1 und WT2. Wärmetauscher WT4a kann dann trotzdem wie in den vorherigen Ausführungsbeispielen beschrieben, mit WT4b gekoppelt sein (der dann wie zuvor beschrieben ist auch mit WT5 gekoppelt sein kann).

Gemäß der vorliegenden Erfindung sind die Wärmetauscher WT1, 2, 3, 4a, 4b, 5 vorzugsweise als Gegenstromwärmetauscher ausgebildet bzw. verschaltet.

## Patentansprüche

1. Lebensmitteltechnische Prozessanlage (1), insbesondere Brauereianlage mit einem Blockheizkraftwerk (2) zum Erwärmen eines Wärmeträgers (10), über den mindestens ein Wärmeverbraucher der lebensmitteltechnischen Prozessanlage (1) mit Wärmeenergie versorgt wird, **dadurch gekennzeichnet, dass** der Wärmeträger (10) über mindestens drei in Reihe geschaltete Wärmetauscher (WT1, WT2, WT3) durch Abwärme des Blockheizkraftwerks auf eine Temperatur > 100°C, vorzugsweise mindestens 105°C, noch bevorzugter mindestens 110°C erwärmt wird, wobei die in Reihe geschalteten mindestens drei Wärmetauscher Wärmetauscher aus folgender Gruppe sind: Wärmetauscher (WT1) zum Kühlen des Motoröls (11) des Blockheizkraftwerks (2), Wärmetauscher (WT2) zum Kühlen von Kühlmedium (12) für den Motorblock (3) des Blockheizkraftwerks (2), Wärmetauscher (WT3) zum Kühlen des Abgases des Blockheizkraftwerks (2) und Wärmetauscher (WT4a) zum Kühlen eines komprimierten Ansauggases des Blockheizkraftwerks (2), wobei vorzugsweise der Wärmetauscher (WT1) zum Kühlen des Motoröls der in Flussrichtung des Wärmeträgers (10) betrachtet, der erste der mindestens drei Wärmetauscher ist.

2. Lebensmitteltechnische Prozessanlage nach Anspruch 1, **dadurch gekennzeichnet, dass** folgende Wärmetauscher in folgender Reihenfolge angeordnet sind: erster Wärmetauscher (WT1) zum Kühlen des Motoröls, zweiter Wärmetauscher (WT2) zum Kühlen von Kühlmedium für den Motorblock, dritter Wärmetauscher (WT3) zum Kühlen des Abgases, wobei insbesondere nach dem ersten (WT1) und vor dem dritten Wärmetauscher (WT3), vorzugsweise zwischen dem zweiten Wärmetauscher (WT2) und dem dritten Wärmetauscher (WT3) ein Wärmetauscher (WT4a) zum Kühlen eines komprimierten Ansauggases des Blockheizkraftwerks (2) angeordnet ist.

3. Lebensmitteltechnische Prozessanlage nach Anspruch 1 oder 2, **dadurch gekennzeichnet, dass** die Prozessanlage (1) einen Wärmeträgerkreislauf K aufweist, der so ausgebildet ist, dass der Wärmeträger (10) durch die mindestens drei in Reihe angeordneten Wärmetauscher (WT1, WT2, WT3) erwärmt wird, über einen Energiespeichertank (7), insbesondere Druckspeichertank und/oder direkt zu mindestens einem Wärmeverbraucher (8) der Prozessanlage (1) geleitet wird und der abgekühlte Wärmeträger (10) wieder direkt und/oder über den Energiespeichertank (7) dem Blockheizkraftwerk (2) zum Kühlen rückgeführt werden kann.

4. Lebensmitteltechnische Prozessanlage nach mindestens einem der Ansprüche 1 bis 3, **dadurch gekennzeichnet, dass** bevor der im Kreislauf (K) geführte Wärmeträger erneut dem ersten Wärmetauscher (WT1), insbesondere dem Wärmetauscher zum Kühlen des Motoröls (WT1), zugeführt wird, ein weiterer Wärmetauscher (WT5) angeordnet ist, der den Wärmeträger auf eine vorbestimmte Temperatur T1, vorzugsweise in einem Bereich von 75 bis 80°C abkühlen kann.

5. Lebensmitteltechnische Prozessanlage nach Anspruch 4, **dadurch gekennzeichnet, dass** ein Bypass (23) vorgesehen ist, der entweder den rücklaufenden Wärmeträger (10) und/oder das Kühlmedium (21), das den rücklaufenden Wärmeträger kühlt, am Wärmetauscher (WT5), der den rücklaufenden Wärmeträger kühlt, vorbeileitet.

6. Lebensmitteltechnische Prozessanlage nach mindestens einem der Ansprüche 1 bis 5, **dadurch gekennzeichnet, dass** das Blockheizkraftwerk (2) einen Wärmetauscher (WT4a) zum Kühlen des komprimierten Ansauggases zwischen einem Verdichter (4a) und einem Motor (3) des Blockheizkraftwerks (2) aufweist und insbesondere einen zweiten Wärmetauscher (WT4b) zum Kühlen des vorgekühlten komprimierten Ansauggases des Blockheizkraftwerks (2), der in Strömungsrichtung hinter dem Wärmetauscher (WT4a) zum Kühlen des komprimierten Ansauggases liegt.

7. Lebensmitteltechnische Prozessanlage (1) nach mindestens einem der vorhergehenden Ansprüche, **dadurch gekennzeichnet, dass** der zweite Wärmetauscher (WT4b) zum Kühlen des Ansauggases einen Zulauf (13) für ein Kühlmedium aufweist und einen Auslauf (14) für das erwärmte Kühlmedium, wobei das erwärmte Kühlmedium dann dem Einlass (16) des Wärmetauschers (WT5), der den im Kreislauf (K) rückgeführten Wärmeträger abkühlt, als Kühlmedium zugeleitet werden kann.

8. Verfahren zum energieoptimierten Versorgen einer lebensmitteltechnischen Prozessanlage, insbesondere nach einem der Ansprüche 1 bis 7 mit Wärmeenergie, wobei durch ein Blockheizkraftwerk (2) ein Wärmeträger (10) zum Versorgen von mindestens einem Wärmeverbraucher (8) der lebensmitteltechnischen Prozessanlage (1) erwärmt wird, **dadurch gekennzeichnet, dass** der Wärmeträger über mindestens drei in Reihe geschaltete Wärmetauscher (WT1, WT2, WT3) durch Abwärme des Blockheizkraftwerks (2) auf eine Temperatur von > 100°C, vorzugsweise mindestens 105°C, noch bevorzugter mindestens 110°C erwärmt wird, wobei die in Reihe geschalteten mindestens drei Wärmetauscher Wärmetauscher aus folgender Gruppe sind: Wärmetauscher (WT1) zum Kühlen des Motoröls (11) des Blockheizkraftwerks (2), Wärmetauscher (WT2) zum Kühlen von Kühlmedium (12) für den Motorblock (3) des Blockheizkraftwerks (2), Wärmetauscher (WT3) zum Kühlen des Abgases des Blockheizkraftwerks (2) und Wärmetauscher (WT4a) zum Kühlen eines komprimierten Ansauggases des Blockheizkraftwerks (2), wobei vorzugsweise der Wärmetauscher (WT1) zum Kühlen des Motoröls der in Flussrichtung des Wärmeträgers (10) betrachtet, der erste der mindestens drei Wärmetauscher ist.

9. Verfahren nach Anspruch 8, **dadurch gekennzeichnet, dass** der Wärmeträger in einem ersten Wärmetauscher (WT1) insbesondere zum Kühlen des Motoröls des Blockheizkraftwerks (2 von einer Temperatur T1 in einem Bereich insbesondere von 75 bis 80°C auf eine Temperatur T2 insbesondere in einem Bereich von 80 bis 90°C erwärmt wird.

10. Verfahren nach Anspruch 9, **dadurch gekennzeichnet, dass** der Wärmeträger nach dem ersten Wärmetauscher (WT1) in einem zweiten Wärmetauscher (WT2) zum Kühlen des Kühlmediums für den Motorblock (3) des Blockheizkraftwerks (2) erwärmt wird und dann der Wärmeträger (10) nach dem Wärmetauscher (WT2) zum Kühlen des Kühlmediums für den Motorblock des Blockheizkraftwerks mit einem dritten Wärmetauscher (WT3) zum Kühlen des Abgases auf eine Temperatur T4 > 100°C, vorzugsweise > 110°C erwärmt wird oder der Wärmeträger (10) nach dem ersten Wärmetauscher (WT1) oder nach dem zweiten Wärmetauscher (WT2) von einem Wärmetauscher (WT4a) zum Kühlen eines komprimierten Ansauggases des Blockheizkraftwerks (2) erwärmt wird und anschließend mit dem dritten Wärmetauscher (WT3) auf die Temperatur T4 erwärmt wird.

11. Verfahren nach mindestens einem der Ansprüche 8 bis 10, **dadurch gekennzeichnet, dass** der Wärmeträger (10) im Kreislauf K geführt wird und insbesondere nachdem er durch die mindestens drei Wärmetauscher (WT1, WT2, WT3) auf eine Temperatur T4 > 100°C, insbesondere > 110°C erwärmt wurde, über einen Energiespeichertank (7), insbesondere Druckspeichertank, oder direkt zu mindestens einem Wärmeverbraucher (8) geleitet wird und der abgekühlte Wärmeträger (10) wieder direkt oder über den Energiespeichertank (7) dem Blockheizkraftwerk (2) zum Kühlen zugeführt wird.

12. Verfahren nach mindestens einem der Ansprüche 8 bis 11, **dadurch gekennzeichnet, dass** der Energiespeichertank ein Schichtenspeicher ist, der Wärmeträger (10) aus dem Schichtenspeicher mit einer vorbestimmten Temperatur entnommen wird und/oder entnommen wird und mit einem Mischeinrichtung auf die vorbestimmte Temperatur gebracht wird.

13. Verfahren nach mindestens einem der Ansprüche 8 bis 12, **dadurch gekennzeichnet, dass** der Wärmeträger (10), bevor er den ersten Wärmetauscher, insbesondere den Wärmetauscher zum Kühlen von Motoröl (WT1) rückgeführt wird, über einen weiteren Wärmetauscher (WT5) insbesondere auf eine Temperatur T1 in einem Bereich von 75 bis 80°C gekühlt wird.

14. Verfahren nach mindestens einem der Ansprüche 8 bis 13, **dadurch gekennzeichnet, dass** beim Betriebsstart des Blockheizkraftwerks (2), dem Blockheizkraftwerk (2) der Wärmeträger (10) vorzugsweise aus einem Energiespeichertank (7) insbesondere mit einer Temperatur T1 ≥ 60 bis 90°C zugeführt wird und dass Motoröl (17) des Blockheizkraftwerks (2) über den Wärmetauscher (WT1) insbesondere auf eine Temperatur in einem Bereich von 70 bis 85°C aufgewärmt wird und/oder das Kühlmedium für den Motorblock des Blockheizkraftwerks über den Wärmetauscher (WT2) insbesondere auf eine Temperatur von 60 bis 90°C aufgewärmt wird.

15. Verfahren nach mindestens einem der Ansprüche 8 bis 14, **dadurch gekennzeichnet, dass** über einen weiteren Wärmetauscher (WT4b) zum Kühlen des komprimierten Ansauggases des Blockheizkraftwerks (3) Kaltwasser erwärmt wird und insbesondere Warmwasser in einem Temperaturbereich von 30 bis 40°C erzeugt wird, wobei vorteilhafterweise das Warmwasser dem Wärmetauscher (WT5) zum Kühlen des Wärmeträgers (10) zugeführt wird und dabei auf eine Temperatur insbesondere in einem Bereich von 40 bis 80°C erwärmt wird.

16. Lebensmitteltechnische Prozessanlage nach mindestens einem der Ansprüche 1 bis 7, **dadurch gekennzeichnet, dass** das Blockheizkraftwerk einen Turbolader umfasst.

## Claims

1. Food processing system (1), in particular a brewery system, having a combined heat and power unit (2) for heating a heat transfer medium (10), via which at least one heat consumer of the food processing system (1) is supplied with heat energy, **characterised in that** the heat transfer medium (10) is heated to a temperature of > 100°C, preferably at least 105°C, more preferably at least 110°C, by waste heat from the combined heat and power unit via at least three heat exchangers (WT1, WT2, WT3) connected in series, with the at least three heat exchangers connected in series being heat exchangers from the following group:
a heat exchanger (WT1) for cooling the engine oil (11) of the combined heat and power unit (2),
a heat exchanger (WT2) for cooling a cooling medium (12) for the engine block (3) of the combined heat and power unit (2),
a heat exchanger (WT3) for cooling the waste gas from the combined heat and power unit (2), and
a heat exchanger (WT4a) for cooling a compressed intake gas of the combined heat and power unit (2),
the heat exchanger (WT1) for cooling the engine oil preferably being the first of the at least three heat exchangers when viewed in the flow direction of the heat transfer medium (10).

2. Food processing system according to claim 1, **characterised in that** the following heat exchangers are arranged in the following sequence:
first heat exchanger (WT1) for cooling the engine oil,
second heat exchanger (WT2) for cooling the cooling medium for the engine block,
third heat exchanger (WT3) for cooling the waste gas,
a heat exchanger (WT4a) for cooling a compressed intake gas of the combined heat and power unit (2) being arranged in particular after the first (WT1) and before the third heat exchanger (WT3), preferably between the second heat exchanger (WT2) and the third heat exchanger (WT3).

3. Food processing system according to either claim 1, or claim 2, **characterised in that** the processing system (1) has a heat transfer medium circuit K which is designed such that the heat transfer medium (10) is heated by the at least three heat exchangers (WT1, WT2, WT3) arranged in series,
is conducted via an energy storage tank (7), in particular a pressure storage tank, and/or directly to at least one heat consumer (8) of the processing system (1) and
the cooled heat transfer medium (10) can be returned directly and/or via the energy storage tank (7) to the combined heat and power unit (2) for cooling.

4. Food processing system according to at least one of claims 1 to 3, **characterised in that** before the heat transfer medium conveyed in the circuit (K) is again fed to the first heat exchanger (WT1), in particular the heat exchanger for cooling the engine oil (WT1), a further heat exchanger (WT5) is arranged which can cool the heat transfer medium to a predetermined temperature T₁, preferably in a range of from 75 to 80°C.

5. Food processing system according to claim 4, **characterised in that** a bypass (23) is provided which conducts either the returning heat transfer medium (10) and/or the cooling medium (21), which cools the returning heat transfer medium, past the heat exchanger (WT5) which cools the returning heat transfer medium.

6. Food processing system according to at least one of claims 1 to 5, **characterised in that** the combined heat and power unit (2) has a heat exchanger (WT4a) for cooling the compressed intake gas between a compressor (4a) and an engine (3) of the combined heat and power unit (2), and in particular a second heat exchanger (WT4b) for cooling the pre-cooled, compressed intake gas of the combined heat and power unit (2) that is located downstream of the heat exchanger (WT4a) for cooling the compressed intake gas.

7. Food processing system (1) according to at least one of the preceding claims, **characterised in that** the second heat exchanger (WT4b) for cooling the intake gas has an inlet (13) for a cooling medium and an outlet (14) for the heated cooling medium, it then being possible for the heated cooling medium to be fed as a cooling medium to the inlet (16) of the heat exchanger (WT5) which cools the heat transfer medium returned in the circuit (K).

8. Method for supplying a food processing system, in particular according to any of claims 1 to 7, with thermal energy in an energy-optimised manner, a heat transfer medium (10) for supplying at least one heat consumer (8) of the food processing system (1) being heated by a combined heat and power unit (2), **characterised in that**
the heat transfer medium is heated to a temperature of > 100°C, preferably at least 105°C, more preferably at least 110°C, by waste heat from the combined heat and power unit (2) via at least three heat exchangers (WT1, WT2, WT3) connected in series, with the at least three heat exchangers connected in series being heat exchangers from the following group: a heat exchanger (WT1) for cooling the engine oil (11) of the combined heat and power unit (2), a heat exchanger (WT2) for cooling a cooling medium (12) for the engine block (3) of the combined heat and power unit (2), a heat exchanger (WT3) for cooling the waste gas from the combined heat and power unit (2), and a heat exchanger (WT4a) for cooling a compressed intake gas of the combined heat and power unit (2), the heat exchanger (WT1) for cooling the engine oil preferably being the first of the at least three heat exchangers when viewed in the flow direction of the heat transfer medium (10).

9. Method according to claim 8, **characterised in that** the heat transfer medium is heated in a first heat exchanger (WT1) in particular for cooling the engine oil of the combined heat and power unit (2) from a temperature T₁ in a range in particular of from 75 to 80°C to a temperature T₂ in particular in a range of from 80 to 90°C.

10. Method according to claim 9, **characterised in that** after the first heat exchanger (WT1), the heat transfer medium is heated in a second heat exchanger (WT2) for cooling the cooling medium for the engine block (3) of the combined heat and power unit (2), and then,
after the heat exchanger (WT2) for cooling the cooling medium for the engine block of the combined heat and power unit, the heat transfer medium (10) is heated to a temperature T₄ > 100°C, preferably > 110°C, by a third heat exchanger (WT3) for cooling the waste gas, or,
after the first heat exchanger (WT1) or after the second heat exchanger (WT2), the heat transfer medium (10) is heated by a heat exchanger (WT4a) for cooling a compressed intake gas of the combined heat and power unit (2) and is then heated to temperature T₄ by the third heat exchanger (WT3).

11. Method according to at least one of claims 8 to 10, **characterised in that** the heat transfer medium (10) is guided in the circuit K and, in particular after it has been heated to a temperature T₄ > 100°C, in particular > 110°C, by the at least three heat exchangers (WT1, WT2, WT3), it is conducted via an energy storage tank (7), in particular a pressure storage tank, or directly to at least one heat consumer (8), and the cooled heat transfer medium (10) is fed back to the combined heat and power unit (2) for cooling either directly or via the energy storage tank (7).

12. Method according to at least one of claims 8 to 11, **characterised in that** the energy storage tank is a stratified storage tank, the heat transfer medium (10) is removed from the stratified storage tank at a predetermined temperature and/or is removed and brought to the predetermined temperature by a mixing apparatus.

13. Method according to at least one of claims 8 to 12, **characterised in that** before it is returned to the first heat exchanger, in particular the heat exchanger for cooling engine oil (WT1), the heat transfer medium (10) is cooled in particular to a temperature T₁ in a range of from 75 to 80°C via a further heat exchanger (WT5).

14. Method according to at least one of claims 8 to 13, **characterised in that** when the combined heat and power unit (2) starts operating, the heat transfer medium (10) is preferably fed from an energy storage tank (7), in particular at a temperature T₁ ≥ 60 to 90°C, to the combined heat and power unit (2), and **in that** engine oil (17) of the combined heat and power unit (2) is warmed up via the heat exchanger (WT1) in particular to a temperature in a range of from 70 to 85°C and/or the cooling medium for the engine block of the combined heat and power unit is warmed up via the heat exchanger (WT2) in particular to a temperature of from 60 to 90°C.

15. Method according to at least one of claims 8 to 14, **characterised in that** cold water is heated via a further heat exchanger (WT4b) for cooling the compressed intake gas of the combined heat and power unit (3) and in particular hot water is produced in a temperature range of from 30 to 40°C, the hot water advantageously being fed to the heat exchanger (WT5) for cooling the heat transfer medium (10) and thereby being heated to a temperature in particular in a range of from 40 to 80°C.

16. Food processing system according to at least one of claims 1 to 7, **characterised in that** the combined heat and power unit comprises a turbocharger.

## Revendications

1. Installation de transformation alimentaire (1), en particulier installation de brasserie avec une centrale thermique à plusieurs tranches (2) permettant de chauffer un agent caloporteur (10) par l'intermédiaire duquel au moins un consommateur de chaleur de l'installation de transformation alimentaire (1) est alimenté en énergie thermique, **caractérisée en ce que** l'agent caloporteur (10) est chauffé grâce à la chaleur résiduelle de la centrale thermique à plusieurs tranches par l'intermédiaire d'au moins trois échangeurs de chaleur (WT1, WT2, WT3) montés en série, à une température > 100°C, de préférence d'au moins 105°C, de manière plus préférée d'au moins 110°C, les au moins trois échangeurs de chaleur montés en série sont issus du groupe ci-dessous : échangeur de chaleur (WT1) permettant de refroidir l'huile moteur (11) de la centrale thermique à plusieurs tranches (2), échangeur de chaleur (WT2) permettant de refroidir l'agent de refroidissement (12) destiné au bloc moteur (3) de la centrale thermique à plusieurs tranches (2), échangeur de chaleur (WT3) permettant de refroidir les gaz d'échappement de la centrale thermique à plusieurs tranches (2) et échangeur de chaleur (WT4a) permettant de refroidir un gaz d'admission comprimé de la centrale thermique à plusieurs tranches (2), dans laquelle l'échangeur de chaleur (WT1) permettant de refroidir l'huile moteur, vu dans la direction d'écoulement de l'agent caloporteur (10), est de manière préférée le premier des au moins trois échangeurs de chaleur.

2. Installation de transformation alimentaire selon la revendication 1, **caractérisée en ce que** les échangeurs de chaleur ci-dessous sont agencés dans l'ordre ci-dessous : premier échangeur de chaleur (WT1) permettant de refroidir l'huile moteur, deuxième échangeur de chaleur (WT2) permettant de refroidir l'agent de refroidissement destiné au bloc moteur, troisième échangeur de chaleur (WT3) permettant de refroidir les gaz d'échappement, dans laquelle en particulier, un échangeur de chaleur (WT4a) permettant de refroidir un gaz d'admission comprimé de la centrale thermique à plusieurs tranches (2) est agencé après le premier échangeur de chaleur (WT1) et avant le troisième échangeur de chaleur (WT3), de manière préférée entre le deuxième échangeur de chaleur (WT2) et le troisième échangeur de chaleur (WT3).

3. Installation de transformation alimentaire selon la revendication 1 ou 2, **caractérisée en ce que** l'installation de transformation (1) présente un circuit d'agent caloporteur K, conçu de sorte que l'agent caloporteur (10) est chauffé grâce aux au moins trois échangeurs de chaleur (WT1, WT2, WT3) agencés en série, est conduit en passant par un réservoir de stockage d'énergie (7), en particulier un réservoir de stockage sous pression, et/ou directement vers au moins un consommateur de chaleur (8) de l'installation de transformation (1) et l'agent caloporteur (10) refroidi peut être renvoyé pour refroidissement vers la centrale thermique à plusieurs tranches (2) directement et/ou en passant par le réservoir de stockage d'énergie (7).

4. Installation de transformation alimentaire selon au moins l'une quelconque des revendications 1 à 3, **caractérisée en ce qu'**un autre échangeur de chaleur (WT5) permettant de refroidir l'agent caloporteur à une température T1 prédéterminée, de manière préférée située dans une plage comprise entre 75 et 80°C, est agencé avant que l'agent caloporteur transporté dans le circuit (K) ne soit à nouveau acheminé vers le premier échangeur de chaleur (WT1), en particulier vers l'échangeur de chaleur permettant de refroidir l'huile moteur (WT1).

5. Installation de transformation alimentaire selon la revendication 4, **caractérisée en ce qu'**une dérivation (23) est prévue, qui détourne l'agent caloporteur (10) en cours de renvoi et/ou l'agent de refroidissement (21) qui refroidit l'agent caloporteur en cours de renvoi vers l'échangeur de chaleur (WT5) qui refroidit l'agent caloporteur en cours de renvoi.

6. Installation de transformation alimentaire selon au moins l'une quelconque des revendications 1 à 5, **caractérisée en ce que** la centrale thermique à plusieurs tranches (2) présente, entre un compresseur (4a) et un moteur (3) de la centrale thermique à plusieurs tranches (2), un échangeur de chaleur (WT4a) permettant de refroidir le gaz d'admission comprimé et en particulier un deuxième échangeur de chaleur (WT4b) permettant de refroidir le gaz d'admission comprimé pré-refroidi de la centrale thermique à plusieurs tranches (2) et situé, dans la direction d'écoulement, en aval de l'échangeur de chaleur (WT4a) permettant de refroidir le gaz d'admission comprimé.

7. Installation de transformation alimentaire (1) selon au moins l'une quelconque des revendications précédentes, **caractérisée en ce que** le deuxième échangeur de chaleur (WT4b) permettant de refroidir le gaz d'admission présente une arrivée (13) destinée à un agent de refroidissement et une sortie (14) destinée à l'agent de refroidissement chauffé, dans laquelle l'agent de refroidissement chauffé peut alors être conduit en tant qu'agent de refroidissement vers l'entrée (16) de l'échangeur de chaleur (WT5) qui refroidit l'agent caloporteur renvoyé dans le circuit (K).

8. Procédé permettant d'alimenter en énergie thermique de manière optimisée une installation de transformation alimentaire, en particulier selon l'une quelconque des revendications 1 à 7, dans lequel un agent caloporteur (10) permettant d'alimenter au moins un consommateur de chaleur (8) de l'installation de transformation alimentaire (1) est chauffé grâce à une centrale thermique à plusieurs tranches (2), **caractérisé en ce que** l'agent caloporteur est chauffé à une température > 100°C, de manière préférée d'au moins 105°C, de manière plus préférée d'au moins 110°C grâce à la chaleur résiduelle de la centrale thermique à plusieurs tranches (2) par l'intermédiaire d'au moins trois échangeurs de chaleur (WT1, WT2, WT3) montés en série, dans lequel les au moins trois échangeurs de chaleur montés en série sont issus du groupe ci-dessous : échangeur de chaleur (WT1) permettant de refroidir l'huile moteur (11) de la centrale thermique à plusieurs tranches (2), échangeur de chaleur (WT2) permettant de refroidir l'agent de refroidissement (12) destiné au bloc moteur (3) de la centrale thermique à plusieurs tranches (2), échangeur de chaleur (WT3) permettant de refroidir les gaz d'échappement de la centrale thermique à plusieurs tranches (2) et échangeur de chaleur (WT4a) permettant de refroidir un gaz d'admission comprimé de la centrale thermique à plusieurs tranches (2), dans laquelle l'échangeur de chaleur (WT1) permettant de refroidir l'huile moteur, vu dans la direction d'écoulement de l'agent caloporteur (10), est de manière préférée le premier des au moins trois échangeurs de chaleur.

9. Procédé selon la revendication 8, **caractérisé en ce que** l'agent caloporteur est chauffé dans un premier échangeur de chaleur (WT1), en particulier permettant de refroidir l'huile moteur de la centrale thermique à plusieurs tranches (2), à partir d'une température T1 située dans une plage comprise en particulier entre 75 et 80°C jusqu'à une température T2 située dans une plage comprise en particulier entre 80 et 90°C.

10. Procédé selon la revendication 9, **caractérisé en ce que** l'agent caloporteur est chauffé après le premier échangeur de chaleur (WT1) dans un deuxième échangeur de chaleur (WT2) permettant de refroidir l'agent de refroidissement destiné au bloc moteur (3) de la centrale thermique à plusieurs tranches (2), puis après l'échangeur de chaleur (WT2) permettant de refroidir l'agent de refroidissement destiné au bloc moteur de la centrale thermique à plusieurs tranches, l'agent caloporteur est chauffé avec un troisième échangeur de chaleur (WT3) permettant de refroidir les gaz d'échappement à une température T4 > 100°C, de manière préférée > 110°C, ou après le premier échangeur de chaleur (WT1) ou après le deuxième échangeur de chaleur (WT2), l'agent caloporteur (10) est chauffé par un échangeur de chaleur (WT4a) permettant de refroidir un gaz d'admission comprimé de la centrale thermique à plusieurs tranches (2) puis est chauffé à la température T4 avec le troisième échangeur de chaleur (WT3).

11. Procédé selon au moins l'une quelconque des revendications 8 à 10, **caractérisé en ce que** l'agent caloporteur (10) est transporté dans le circuit K et, en particulier après avoir été chauffé à une température T4 > 100°C, en particulier > 110°C grâce aux au moins trois échangeurs de chaleur (WT1, WT2, WT3), est conduit en passant par un réservoir de stockage d'énergie (7), en particulier un réservoir de stockage sous pression, ou directement vers au moins un consommateur de chaleur (8) et l'agent caloporteur (10) refroidi est renvoyé pour refroidissement vers la centrale thermique à plusieurs tranches (2) directement et/ou en passant par le réservoir de stockage d'énergie (7).

12. Procédé selon au moins l'une quelconque des revendications 8 à 11, **caractérisé en ce que** le réservoir de stockage d'énergie est un réservoir de stockage stratifié, l'agent caloporteur (10) est retiré du réservoir de stockage stratifié à une température prédéterminée et/ou est retiré et est porté à la température prédéterminée avec un dispositif de mélange.

13. Procédé selon au moins l'une quelconque des revendications 8 à 12, **caractérisé en ce que** l'agent caloporteur (10), avant d'être renvoyé vers le premier échangeur de chaleur, en particulier l'échangeur de chaleur permettant de refroidir l'huile moteur (WT1), est refroidi en particulier à une température T1 située dans une plage comprise entre 75 et 80°C par l'intermédiaire d'un autre échangeur de chaleur (WT5).

14. Procédé selon au moins l'une quelconque des revendications 8 à 13, **caractérisé en ce que**, lorsque la centrale thermique à plusieurs tranches (2) commence à fonctionner, l'agent caloporteur (10) est acheminé vers la centrale thermique à plusieurs tranches (2), de manière préférée à partir d'un réservoir de stockage d'énergie (7), en particulier à une température T1 comprise entre 60 et 90°C et **en ce que** l'huile moteur (17) de la centrale thermique à plusieurs tranches (2) est réchauffée en particulier à une température située dans la plage comprise entre 70 et 85°C par l'intermédiaire de l'échangeur de chaleur (WT1), et/ou l'agent de refroidissement destiné au bloc moteur de la centrale thermique à plusieurs tranches est réchauffé en particulier à une température comprise entre 60 et 90°C par l'intermédiaire de l'échangeur de chaleur (WT2).

15. Procédé selon au moins l'une quelconque des revendications 8 à 14, **caractérisé en ce que** de l'eau froide est chauffée par l'intermédiaire d'un autre échangeur de chaleur (WT4b) permettant de refroidir le gaz d'admission comprimé de la centrale thermique à plusieurs tranches (3), et de l'eau chaude est en particulier produite dans une plage de température comprise entre 30 et 40°C, dans lequel l'eau chaude est acheminée de manière préférée vers l'échangeur de chaleur (WT5) permettant de refroidir l'agent caloporteur (10) et y est chauffée à une température en particulier située dans une plage comprise entre 40 et 80°C.

16. Installation de transformation alimentaire selon au moins l'une quelconque des revendications 1 à 7, **caractérisée en ce que** la centrale thermique à plusieurs tranches comprend un turbocompresseur.
